# EUROPÄISCHE PATENTSCHRIFT

(11) **EP 2 497 806 B1**
(45) Veröffentlichungstag und Bekanntmachung des Hinweises auf die Patenterteilung: **17.01.2018**
(21) Anmeldenummer: 12156432.2
(22) Anmeldetag: 22.02.2012
(51) Int. Cl.: C09J 7/04, D04H 1/52

(54) **Klebeband mit Nähwirkvlies-Träger für die Kabelbandagierung**
Adhesive tape with stitch-bonded non-woven fabric carrier for cable bandaging
Bande adhésive avec support non-tissé aiguilleté pour le bandage de câbles

(30) Priorität: 07.03.2011 DE 102011005163
(43) Veröffentlichungstag der Anmeldung: 12.09.2012
(73) Patentinhaber: tesa SE, 22848 Norderstedt (DE)
(72) Erfinder: Siebert, Dr. Michael, 22869 Schenefeld (DE); Seitzer, Dennis, 22335 Hamburg (DE); Wahlers-Schmidlin, Andreas, 21720 Guderhandviertel (DE); Wienke, Daniel, 22299 Hamburg (DE)

(56) Entgegenhaltungen:
- DE-A1-102006 006 405
- DE-A1-102006 022 765
- DE-A1-102008 028 427
- DE-U1-202008 013 541
- US-B1- 6 595 843
- "Standard Test Method for Breaking Force and Elongation of Textile Fabrics (Strip Method)", ASTM D5035-06,, 1 January 2008 (2008-01-01), pages 209-216, XP009133402,

## Beschreibung

Die Erfindung betrifft ein Klebeband vorzugsweise zum Umhüllen von langgestrecktem Gut wie insbesondere Leitungen oder Kabelsätze mit einem textilen Träger und mit einer zumindest auf einer Seite des Trägers aufgebrachten vorzugsweise druckempfindlichen Klebebeschichtung. Des Weiteren betrifft die Erfindung die Verwendung des Klebebands sowie ein langgestrecktes Gut wie einen Kabelbaum, das mit dem erfindungsgemäßen Klebeband ummantelt ist, und den textilen Träger selbst.

In vielen Industriebereichen werden Bündel aus einer Vielzahl von elektrischen Leitungen vor dem Einbau oder in bereits montiertem Zustand umwickelt, um den Raumbedarf des Leitungsbündels durch Bandagieren zu reduzieren sowie zusätzlich eine Schutzfunktion zu erzielen. Mit Folienklebebändern wird ein gewisser Schutz vor Flüssigkeitszutritt erreicht, mit Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt.

Die Verwendung von Klebebändern mit einem Vlies als Träger zur Bandagierung von Kabelbäumen ist bekannt. So beschreiben die DE 94 01 037 U und die EP 0 668 336 A1 ein Klebeband mit einem bandförmigen, textilen Träger, der aus einem Nähvlies besteht, das seinerseits aus einer aus einer Vielzahl parallel zueinander laufender, eingenähter Nähte gebildet wird. Das beschriebene Klebeband zeigt bei seiner Verwendung zur Kabelbaumbandagierung aufgrund seiner speziellen Ausführung Geräuschdämpfungseigenschaften. Für diesen Typ Vlies sind Nähwirkmaschinen des Typs "Maliwatt" der Firma Karl Mayer, ehemals Malimo, bekannt und im Einsatz. Dabei wird ein Vorvlies aus quergelegten Stapelfasern hergestellt, das ohne weitere Vorverfestigung der Nähstelle zugeführt wird, in der die in Maschinenrichtung parallel zueinander laufenden Fäden eingenäht und damit die Fasern verfestigt werden. Quergelegt heißt, dass die Fasern mit einer exakt in Maschinenrichtung des Vlieses verlaufenden Achse einen Winkel von bevorzugt 90° einschließen.

Die Richtung des Stoffflusses in der Maschine, in der ein Vlies oder allgemein Stoff hergestellt wird, wird als Maschinenrichtung bezeichnet, die Richtung im rechten Winkel hierzu dementsprechend als Querrichtung.

Neben dem in der genannten Schrift erwähnten Nähvlies gibt es weitere Träger, die in Klebebändern zur Kabelbaumbandagierung eingesetzt werden.

Der DE 44 42 093 C1 liegt die Verwendung eines Vlieses als Träger für ein Klebeband zugrunde, das durch die Bildung von Maschen aus den Fasern des Vlieses verstärktes Querfaservlies entsteht, also ein dem Fachmann unter dem Namen Malivlies bekanntes Vlies. Die DE 44 42 507 C1 offenbart ein Klebeband zur Kabelbandagierung, jedoch basiert es auf so genannten Kunit- beziehungsweise Multiknitvliesen.

Die DE 10 2008 028 427 A1 offenbart ein Klebeband zum Ummanteln von Kabelsätzen mit einem Träger auf Vliesbasis, der zumindest einseitig mit einer Klebebeschichtung versehen ist, wobei der Träger ein Flächengewicht von 30 bis 120 g/m² aufweist.
Der Träger besteht aus mindestens einer Lage eines vorverfestigten Vlieses, insbesondere eines Spinnvlieses, eines Meltblown-Vlieses oder eines mechanisch (durch Luft- und/oder Wasserstrahlen oder durch Vernadelung) verfestigten Stapelfaservlieses, das mit einer Vielzahl von Fäden übernäht ist, die gemäß einer bevorzugten Ausführungsform in Maschinenrichtung parallel zueinander verlaufen.

Das Ziehen am Klebeband beim Abrollen von einseitig mit einer Klebemasse beschichteten Klebebändern kann dazu führen, dass sich das abgezogene Klebeband zwischen Hand und Rolle zwischen den Längskanten in Form eines Halbzylinders aufwölbt, und zwar derart, dass sich die mit Klebemasse beschichtete Seite auf der Außenseite des Halbzylinders befindet. Dieser Effekt wird "Nipping" oder "Dachrinne" genannt.

In Extremfällen kann sich das Klebeband auch vollständig zusammenrollen, so dass sich die beiden Längskanten des Klebebands berühren. Bei Betrachtung des Querschnitts ergibt sich ein geschlossener Kreis.
Je schneller das Klebeband abgerollt wird, desto stärker stellt sich Nipping ein.

Zunächst hängt Nipping erheblich von der Abrollkraft ab.
Die Abrollkraft ist diejenige Kraft, die benötigt wird, um von einer Rolle eine Lage des Klebebandes von der anderen Lage abziehen zu können. Die Abrollkraft hängt unter anderem/stark von der Wickelspannung bei der Herstellung der Rollen ab und kann nach Lagerung von Klebebandrollen ansteigen.

Damit kann beim Herstellungsprozess eines Klebebands der Masseauftrag und der nachfolgende Wickelprozess nicht frei gewählt werden, um zu einem funktionierenden Klebeband zu gelangen.
Daraus folgt, dass für den Wickelprozess nur ein sehr enges Prozessfenster für eine hinreichende Rollenfestigkeit (hohe Wickelspannungen) und eine geringe Abrollkraft zur Verfügung stehen, um zu einem geringen Dachrinneneffekt (niedrige Wickelspannungen) zu gelangen.

Darüber hinaus ist der Dachrinneneffekt bei mit Nähfäden übernähten Vliesträgern stark abhängig von der Zahl der Fäden, mit denen das Vlies übernäht worden ist.

Eine Reißfestigkeit in Querrichtung von weniger als 10 N, welche nach der AFERA-Norm 4007 bestimmt wird, dient als Kriterium für die Handeinreißbarkeit des Bandes.
Gerade Klebebänder mit einem Vlies-Nähwirkträger (Maliwattträger; siehe DIN 61211:2005-05 aus Mai 2005)) haben das Problem, dass bei zu starker Verfestigung die Handeinreißbarkeit deutlich vermindert wird.

Sodann neigen diese Klebebänder bei nicht ausreichender Verfestigung durch Nähfäden dazu, dass beim Abrollen Fasern aus der darunter liegenden Lage ausgerissen werden, die die Klebkraft des Klebebands herabsetzen und das Aussehen des Klebebands beeinträchtigen. Die Abrollkraft des Klebebands nimmt dadurch zu, die Fasern sind verklebt.

Die bekannten Klebebänder mit Vlies-Nähwirkträger haben den offensichtlichen Nachteil, dass diese zwar mechanisch ausreichend stabil sind, aber dann beim Abrollen einen Dachrinneneffekt und Faserausriss zeigen, des Weiteren sich die Abrollkraft nicht im optimalen Bereich befindet.

Aufgabe der Erfindung ist es, gegenüber dem Stand der Technik eine merkliche Verbesserung zu erzielen und ein Klebeband sowie einen textilen Träger bereitzustellen, welche mechanisch stabil sind, dabei einen deutlich reduzierten Faserausriss oder kein Nipping haben und die auf der anderen Seite sehr gut handeinreißbar sind.

Gelöst wird diese Aufgabe durch ein Klebeband, wie es im Hauptanspruch näher gekennzeichnet ist. In den Unteransprüchen sind vorteilhafte Ausführungsformen der Erfindung beschrieben. Des Weiteren sind die Verwendung des erfindungsgemäßen Bands sowie der im Hauptanspruch definierte textile Träger in Form eines Vlies-Nähwirkträgers vom Erfindungsgedanken umfasst.

Demgemäß betrifft die Erfindung ein Klebeband, bestehend aus einem Träger und aus einer auf mindestens einer Seite des Trägers aufgebrachten Klebeschicht, wobei der Träger ein Vlies-Nähwirkträger ist, der aus einem vorverfestigten Vorvlies aus Stapelfasern hergestellt wird, wobei in das Vorvlies die parallel zueinander laufenden Fäden eingenäht werden, so dass der fertige Vlies-Nähwirkträger entsteht, wobei die Höchstzugkraft des vorverfestigten, aber noch nicht übernähten Vorvlieses kleiner als 2 N/cm, vorzugsweise kleiner 1 N/cm, besonders vorzugsweise kleiner 0,5 N/cm ist.
Das Stapelfasergelege wird vor dem Vernähen durch eine Vernadelung vorverfestigt, wobei die Vernadelungsdichte durch die Vernadelung 1 Nadel/cm² Stapelfasergelege bis 50 Nadeln/cm² Stapelfasergelege beträgt.
Stapelfasern sind Einzelfasern, die in ihrer Länge begrenzt sind. Das Gegenteil von Stapelfasern sind Filamente (Endlosfasern). Alle Naturfasern sind Stapelfasern, da sie nur bis zu einer bestimmten Länge vorkommen. Alle Chemiefasern können zu Stapelfasern geschnitten werden. Im Folgenden werden die Stapelfasern auch vereinfacht nur Fasern genannt.
Erfindungsgemäß ist die einseitig klebend ausgerüstete Variante des Klebebands bevorzugt.

Bevorzugt besteht das Vlies aus Polyester-, Polypropylen-, Polyethylen- oder Polyamidfasern.
Die Faserdicke beträgt bevorzugt 1 bis 5 dtex (1 tex: 1 Gramm pro 1.000 Meter), vorzugsweise 1,7 bis 3,64 dtex.
Die Faserlänge beträgt bevorzugt 50 bis 100 mm, vorzugsweise 60 bis 85 mm.

Weiter bevorzugt bestehen die Nähfäden aus Polyester, Polypropylen, Polyethylen oder Polyamid.
Der Nähfaden kann in Fransenbindung oder in Trikotbindung aufgebracht werden.
Die Fadendicke beträgt bevorzugt 20 bis 70 dtex.

Gemäß einer weiteren bevorzugten Ausführungsform der Erfindung liegt das Flächengewicht des Vlies-Nähwirkträgers zwischen 30 g/m² und 180 g/m².

Das Stapelfasergelege ist vor dem Vernähen durch eine Vernadelung vorverfestigt, wobei die Vernadelungsdichte 1 Nadel/cm² Stapelfasergelege bis 50 Nadeln/cm² Stapelfasergelege beträgt.

Darüber hinaus kann durch die Vorverfestigung des Grundvlieses die Fadenzahl der Übernähfaden pro 25 mm unter den Wert von 30 Fäden/25 mm Breite des Trägers verringert werden, ohne dass beim Abrollen des Klebebandes Fasern aus der Rückseite gerissen werden. Vorzugsweise liegt die Fadenzahl zwischen 10 bis 24 Fäden/25 mm Breite des Trägers, besonders bevorzugt bei 22 Fäden/25 mm.

Der erfindungsgemäße Vlies-Nähwirkträger kann in einem zweistufigen Verfahren hergestellt werden, indem das Übernähen des vorverfestigten Vlieses in einem separaten Prozessschritt stattfindet.
Der erfindungsgemäße Vlies-Nähwirkträger kann auch in einem einstufigen Verfahren hergestellt werden, indem das Übernähen des vorverfestigten Vlieses inline stattfindet.

Weiterhin kann durch Kalandern des Vliesträgers eine Verdichtung des Vlieses erfolgen, was sich positiv auf die Gleichmäßigkeit des Vlieses und den benötigten Klebmasseauftrag auswirken kann. Unter Kalandern versteht man das Verpressen des Vlieses zwischen zwei Walzen unter Druck und eventuell erhöhter Temperatur.

Damit ein erfindungsgemäßes Klebeband eine gute Handeinreißbarkeit hat, sollte der Winkel α von mindestens 50 % der Fasern zwischen 10° und 45° (Faserlegung verdreht in Bezug auf die Querrichtung) liegen, so dass nicht überwiegend die Vliesfasern zerrissen werden müssen, sondern der Kettfaden. Das ist der Fall, wenn die Fasern möglichst entlang der Reißrichtung liegen.
Wie bereits oben erwähnt, dient eine Reißfestigkeit in Querrichtung von weniger als 10 N, welche nach der AFERA-Norm 4007 bestimmt wird, als Kriterium für die Handeinreißbarkeit des Bandes.

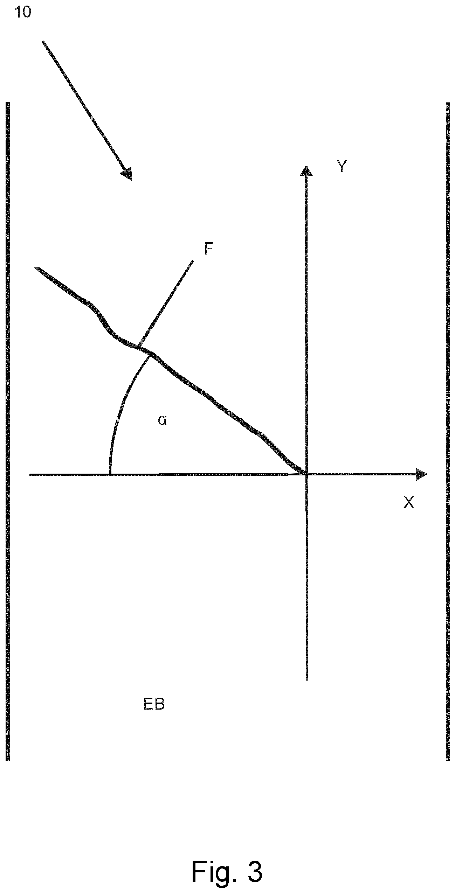

In der Figur 3 ist gezeigt, wie der Winkel α bei einer Faser F, die sich in dem Vliesträger 10 befindet, zu bestimmen ist. Idealerweise weist die Faser F die Form einer Geraden auf und liegt exakt in der Ebene EB, die von der Achse Y in Maschinenrichtung und von der Achse X in Querrichtung, die in einem rechten Winkel zueinanderstehen, aufgespannt wird. Für den Fall, dass die Faser F näherungsweise die Form einer Geraden hat, lässt sich der Winkel α immer noch anhand der Faser F selbst bestimmen. Dies zeigt die Figur 3.
Das Blatt Papier, auf dem die Figur 3 dargestellt ist, ist ein Ausschnitt aus der Ebene EB.

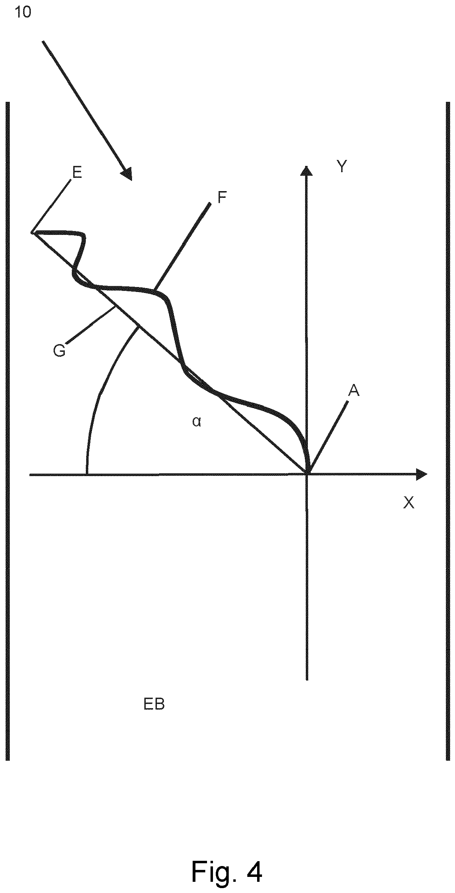

Für den Fall, dass die Faser F nicht gerade vorliegt, sondern in einer von der Geraden abweichenden Form, beispielsweise in der in Figur 4 gezeigten Weise mit leichten Wellen, wird der Winkel α bestimmt, indem eine Gerade G zwischen Anfangspunkt A und Endpunkt E der Faser F gelegt wird, so dass der Winkel α der Winkel α zwischen der in Querrichtung des Vlieses verlaufenden Achse X und der Geraden G ist.
Nicht in Betracht gezogen werden diejenigen sehr wenigen Fasern, die einen geschlossenen Kreis bilden.

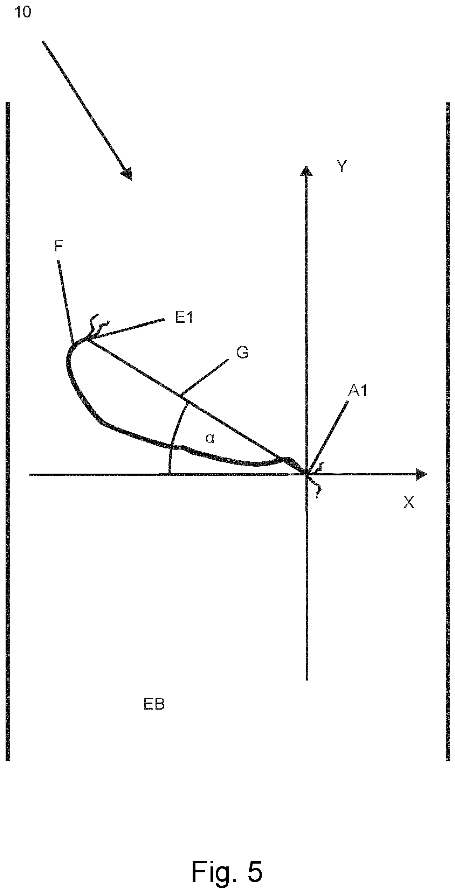

Sollten ein Ende oder gar beide Enden der Faser F aufgespleißt sein, so wird die Gerade G zwischen die Punkte A1 und E1 gelegt, die die Punkte auf der Faser F darstellen, an denen der Spleiß jeweils beginnt (siehe Figur 5).

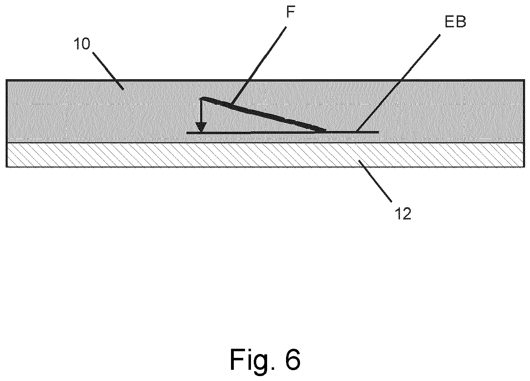

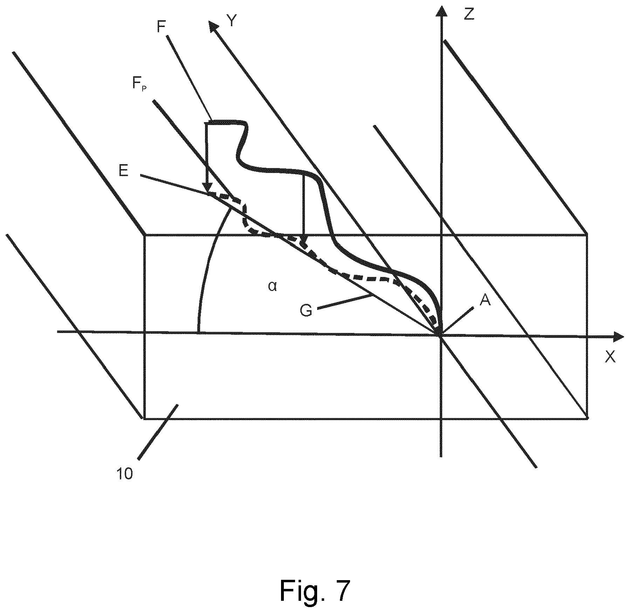

Für den Fall, dass die Faser F nicht exakt in der Ebene EB, die von der Achse Y in Maschinenrichtung und von der Achse X in Querrichtung aufgespannt wird, liegt, sondern sich auch teilweise über die Dicke des Vlieses erstreckt (also in z-Richtung), so wird die Faser F zunächst lotrecht auf die Ebene EB projiziert, was zu der der virtuellen Faser F_{P} in der Ebene EB führt. Dann werden Anfangspunkt A und Endpunkt E der Faser F_{P} durch die Gerade G miteinander verbunden und der Winkel α entsprechend bestimmt (siehe Figuren 6 und 7).

Gemäß einer bevorzugten Ausführungsform liegt der Winkel α, den mindestens 50 % der Fasern mit einer exakt in Querrichtung des Vlieses verlaufenden Achse einschließen, zwischen 5° und 45°, vorzugsweise zwischen 15° und 30°.

Weiter vorzugsweise liegt der Anteil der Fasern, die einen Winkel α zwischen 5° und 45°, vorzugsweise zwischen 15° und 30° mit einer exakt in Maschinenrichtung des Vlieses verlaufenden Achse einschließen, über 80 %, bevorzugt über 90 %, besonders bevorzugt über 95 %.

Gleichzeitig ist die Nadeldichte kleiner/gleich 50 Nadeln/cm², da durch jeden Vernadelungspunkt die Orientierung der Fasern isotrop wird. Bei einer zu hohen Zahl an Vernadelungspunkten wird die durch die Quertäfelung erreichte bevorzugte Orientierung in Querrichtung deutlich vermindert beziehungsweise tendenziell aufgehoben.

Um aus dem Träger ein Klebeband herzustellen, kann auf alle bekannten Klebemassensysteme zurückgegriffen werden. Neben Natur- oder Synthesekautschuk basierten Klebemassen sind insbesondere Silikonklebemassen sowie Polyacrylatklebemassen, vorzugsweise eine niedermolekulare Acrylatschmelzhaftklebemasse, verwendbar. Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind.
Das Auftragsgewicht bewegt sich vorzugsweise im Bereich zwischen 15 bis 200 g/m², weiter vorzugsweise 30 bis 120 g/m² (entspricht ungefähr einer Dicke von 15 bis 200 µm, weiter vorzugsweise 30 bis 120 µm).

Vorzugsweise ist die Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.
Der K-Wert (nach FIKENTSCHER) ist ein Maß für die durchschnittliche Molekülgröße hochpolymerer Stoffe. Die Bestimmung der Viskosität von Polymeren durch ein Kapillarviskosimeter erfolgt nach DIN EN ISO 1628-1:2009.
Zur Messung werden einprozentige (1 g/100 ml) toluolische Polymerlösungen bei 25 °C hergestellt und unter Verwendung des entsprechenden DIN-Ubbelohde-Viskosimeters nach ISO 3105:1994, Tabelle B.9 vermessen.
Das Aufkonzentrieren kann in entsprechend ausgerüsteten Kesseln oder Extrudern stattfinden, insbesondere beim damit einhergehenden Entgasen ist ein Entgasungs-Extruder bevorzugt.
Eine derartige Klebemasse ist in der DE 43 13 008 C2 dargelegt. Diesen auf diesem Wege hergestellten Acrylatmassen wird in einem Zwischenschritt das Lösungsmittel vollständig entzogen.

Zusätzlich werden dabei weitere leichtflüchtige Bestandteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.
Die Lösung der Masse kann 5 bis 80 Gew.-%, insbesondere 30 bis 70 Gew.-% Lösungsmittel enthalten.
Vorzugsweise werden handelsübliche Lösungsmittel eingesetzt, insbesondere niedrig siedende Kohlenwasserstoffe, Ketone, Alkohole und/oder Ester.
Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben. Die Klebemasse auf Acrylathotmelt-Basis kann UV-vernetzt werden. Andere Vernetzungsarten sind aber auch möglich, zum Beispiel die Elektronenstrahlenvernetzung.
In einer weiteren bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich als besonders geeignet zeigt, ist eine Acrylatschmelzhaftklebemasse, wie sie unter der Bezeichnung acResin, insbesondere acResin A 260 UV, von der BASF geführt wird. Diese Klebemasse mit niedrigem K-Wert erhält ihre anwendungsgerechten Eigenschaften durch eine abschließende strahlenchemisch ausgelöste Vernetzung.

Die Klebemasse kann in Längsrichtung des Klebebands in Form eines Streifens aufgebracht sein, der eine geringere Breite aufweist als der Träger des Klebebands.
Der beschichtete Streifen hat in einer vorteilhaften Ausführungsform eine Breite von 10 bis 80 % der Breite des Trägermaterials. Besonders vorzugsweise erfolgt der Einsatz von Streifen mit einer Beschichtung von 20 bis 50 % der Breite des Trägermaterials.
Je nach Verwendungsfall können auch mehrere parallele Streifen des Klebers auf dem Trägermaterial beschichtet sein.
Die Lage des Streifens auf dem Träger ist frei wählbar, wobei eine Anordnung direkt an einer der Kanten des Trägers bevorzugt wird.

Die Herstellung und Verarbeitung der Klebemassen kann aus Lösung, Dispersion sowie aus der Schmelze erfolgen. Bevorzugte Herstell- und Verarbeitungsverfahren erfolgen aus Lösung sowie aus der Schmelze. Besonders bevorzugt ist die Fertigung der Klebmasse aus der Schmelze, wobei insbesondere Batchverfahren oder kontinuierliche Verfahren eingesetzt werden können. Besonders vorteilhaft ist die kontinuierliche Fertigung der Haftklebemassen mit Hilfe eines Extruders.

Die so hergestellten Klebemassen können dann mit den allgemein bekannten Verfahren auf den Träger gebracht werden. Bei Verarbeitung aus der Schmelze können dies Auftragsverfahren über eine Düse oder einen Kalander sein.
Bei Verfahren aus der Lösung sind Beschichtungen mit Rakeln, Messern oder Düsen bekannt, um nur einige wenige zu nennen.
Möglich ist auch eine Transferierung der Klebemasse von einem anti-adhäsiven Trägertuch oder Releaseliner auf den Trägerverbund.

Schließlich kann das Klebeband ein Abdeckmaterial aufweisen, mit dem bis zum Gebrauch die eine oder die zwei Klebemasseschichten eingedeckt sind. Als Abdeckmaterialien eignen sich auch alle oben ausführlich aufgeführten Materialien. Bevorzugt wird aber ein nicht-fusselndes Material eingesetzt wie eine Kunststofffolie oder ein gut verleimtes, langfaseriges Papier.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband kann sowohl in Form einer Rolle, also in Form einer archimedischen Spirale auf sich selbst aufgerollt, als auch klebmasseseitig eingedeckt mit Trennmaterialien wie silikonisiertem Papier oder silikonisierter Folie hergestellt werden. Auf der Rückseite des Klebebandes kann ein Rückseitenlack aufgetragen sein, um die Abrolleigenschaften des zur archimedischen Spirale gewickelten Klebebandes günstig zu beeinflussen. Dieser Rückseitenlack kann dazu mit Silikon- oder Fluorsilikonverbindungen sowie mit Polyvinylstearylcarbamat, Polyethyleniminstearylcarbamid oder fluororganischen Verbindungen als abhäsiv wirkende Stoffe ausgerüstet sein. Gegebenenfalls befindet sich unter dem Rückseitenlack oder alternativ dazu einen Schaumbeschichtung auf der Rückseite des Klebebands.

Vorzugsweise wird das Klebeband zum Ummanteln von langgestrecktem Gut wie insbesondere Kabelsätzen eingesetzt, wobei das langgestreckte Gut in axialer Richtung von dem Klebeband umhüllt wird oder das Klebeband in einer schraubenförmigen Spirale um das langgestreckte Gut geführt wird.

Schließlich umfasst der Erfindungsgedanke auch ein langgestrecktes Gut, ummantelt mit einem erfindungsgemäßen Klebeband. Vorzugsweise handelt es sich bei dem langgestreckten Gut um einen Kabelsatz.

Überraschenderweise zeigt sich, dass durch zusätzlich zum Nähfaden auftretende Verschlaufungspunkte der Dachrinneneffekt vermindert werden kann.
Bei einem üblichen Vlies-Faden-Nähwirkträger ist diese Beobachtung nicht möglich, da prozessbedingt keine Vorverfestigung des Vlieses stattfindet.
Überraschenderweise kann durch eine geringe Vorverfestigung des Trägers der Dachrinneneffekt verbessert werden kann, ohne dass ein wesentlicher negativer Einfluss auf die Handeinreißbarkeit zu beobachten ist.

Zusätzlich ermöglichen ergänzende Verschlaufungspunkte, dass der Faserausriss minimiert wird. Es kann daher zum einen im Vergleich zu Vlies-Faden-Nähwirkträger darauf verzichtet werden, dass die Fasern im Träger durch die Klebmasse verfestigt werden müssen, und zum anderen erhält man ein wesentlich größeres Prozessfenster hinsichtlich der Einstellung der Abrollkraft durch die Wickelspannung bei der Herstellung von schmalen Rollen. Bei schmalen Rollen, zum Beispiel mit einer Breite von 9 mm, tritt zutage, das längere Fasern beim Schneiden durchgeschnitten werden und so nicht mehr den Vliesverbund stabilisieren können. Bei hohen Wickelspannungen werden dann zum Beispiel beim Abrollen des Klebebands vermehrt Fasern ausgerissen, was zu einer Erhöhung der Abrollkraft und letztendlich Verminderung der Klebkraft führt, weil die Klebemasse durch die Fasern verunreinigt ist.

Aufgrund der hervorragenden Eignung des Klebebandes kann es in einer Ummantelung Verwendung finden, die aus einer Eindeckung besteht, bei der zumindest in einem Kantenbereich der Eindeckung das selbstklebend ausgerüstete Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich.
Ein derartiges Produkt sowie optimierte Ausführungsformen desselben werden in der EP 1 312 097 A1 offenbart. In der EP 1 300 452 A2, der DE 102 29 527 A1 sowie der WO 2006 108 871 A1 werden Weiterentwicklungen dargestellt, für die das erfindungsgemäße Klebeband ebenfalls sehr gut geeignet ist. Ebenso kann das erfindungsgemäße Klebeband in einem Verfahren Verwendung finden, wie es die EP 1 367 608 A2 offenbart. Schließlich beschreiben die EP 1 315 781 A1 sowie die DE 103 29 994 A1 Ausführungsformen von Klebebändern, wie sie auch für das erfindungsgemäße Klebeband möglich sind.

Darüber hinaus schließt die Erfindung auch ein Vlies-Nähwirkträger ein, der aus einem Vorvlies aus Stapelfasern hergestellt wird, wobei in das vorverfestigte Vorvlies die parallel zueinander laufenden Fäden eingenäht werden, so dass der fertige Vlies-Nähwirkträger entsteht, wobei die Höchstzugkraft des vorverfestigten, aber noch nicht übernähten Vorvlieses kleiner als 2 N/cm, vorzugsweise kleiner 1 N/cm, besonders vorzugsweise kleiner 0,5 N/cm ist.
bas Stapelfasergelege wird vor dem Vernähen durch eine Vernadelung vorverfestigt, wobei die Vernadelungsdichte durch die Vernadelung 1 Nadel/cm² Stapelfasergelege bis 50 Nadeln/cm² Stapelfasergelege beträgt.

Der Vlies-Nähwirkträger kann alle vorteilhaften Eigenschaften aufweisen, wie sie im Rahmen dieser Offenbarung für den Vlies-Nähwirkträger beschrieben werden, der erfindungsgemäß als Klebebandträger Verwendung findet.

Im Folgenden soll das Klebeband anhand mehrerer Figuren näher erläutert werden, ohne damit eine wie auch immer geartete Einschränkung hervorrufen zu wollen.

Es zeigen
- Figur 1: das Klebeband im seitlichen Schnitt,
- Figur 2: einen Ausschnitt eines Kabelbaums, der sich aus einer Bündelung von einzelnen Kabeln zusammensetzt und der mit dem erfindungsgemäßen Klebeband ummantelt ist.

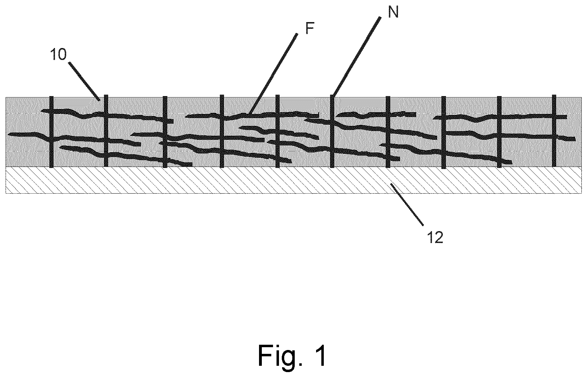

In der Figur 1 ist im Schnitt in Querrichtung (Querschnitt) das Klebeband gezeigt, das aus einem Vlies-Nähwirkträger 10 besteht, auf den einseitig eine Schicht einer selbstklebenden Beschichtung 12 aufgebracht ist. Der Vlies-Nähwirkträger 10 besteht aus den Fasern F, die durch in regelmäßigen Abständen angeordnete Nähnähte N übernäht sind.

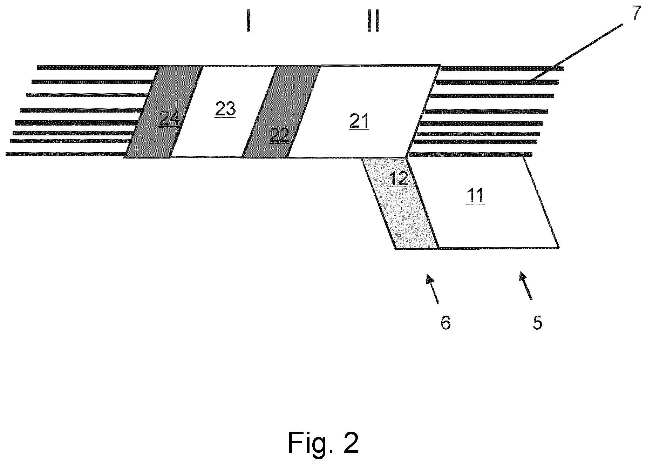

In der Figur 2 ist ein Ausschnitt eines Kabelbaums gezeigt, der sich aus einer Bündelung von einzelnen Kabeln 7 zusammensetzt und der mit dem erfindungsgemäßen Klebeband ummantelt ist. Das Klebeband wird in einer spiralförmigen Bewegung um den Kabelbaum geführt.
Der gezeigte Ausschnitt des Kabelbaums zeigt zwei Wicklungen I und II des Klebebands. Nach links hin würden sich weitere Wicklungen erstrecken, diese sind hier nicht dargestellt.
Auf der Klebebeschichtung ist ein Streifen 5 der Eindeckung vorhanden, so dass sich ein in Längsrichtung des Bands erstreckender Klebestreifen 6 ergibt. Es wechseln sich nichtklebende Bereiche 11, 21, 23 des Klebebands mit klebenden Bereichen 12, 22, 24 ab. (Die Abschnitte 22, 24 sind im Gegensatz zur offen liegenden Klebemasse 12 von außen nicht sichtbar, weshalb die dichtere Schraffur zur Darstellung gewählt ist.)
Die Ummantelung des Kabelbaums erfolgt derartig, dass der Klebemassestreifen 6 vollständig auf dem Klebeband verklebt. Eine Verklebung mit den Kabeln 7 ist ausgeschlossen.

## Patentansprüche

1. Klebeband, bestehend aus einem Träger und aus einer auf mindestens einer Seite des Trägers aufgebrachten Klebeschicht, wobei der Träger ein Vlies-Nähwirkträger ist, der aus einem vorverfestigten Vorvlies aus Stapelfasern hergestellt wird,
wobei das Stapelfasergelege vor dem Vernähen durch eine Vernadelung vorverfestigt wird,
wobei die Vernadelungsdichte durch die Vernadelung 1 Nadel/cm² Stapelfasergelege bis 50 Nadeln/cm² Stapelfasergelege beträgt,
wobei in das Vorvlies die parallel zueinander laufenden Fäden eingenäht werden, so dass der fertige Vlies-Nähwirkträger entsteht,
wobei die Höchstzugkraft des vorverfestigten, aber noch nicht übernähten Vorvlieses kleiner als 2 N/cm, vorzugsweise kleiner 1 N/cm, besonders vorzugsweise kleiner 0,5 N/cm ist.

2. Klebeband nach Anspruch 1,
**dadurch gekennzeichnet, dass**
das Vlies aus Polyester-, Polypropylen-, Polyethylen- oder Polyamidfasern besteht.

3. Klebeband nach Anspruch 1 oder 2,
**dadurch gekennzeichnet, dass**
die Nähfäden aus Polyester, Polypropylen, Polyethylen oder Polyamid bestehen.

4. Klebeband nach zumindest einem der Ansprüche 1 bis 3,
**dadurch gekennzeichnet, dass**
die Nähfäden parallel zueinander in Maschinenrichtung verlaufen.

5. Klebeband nach zumindest einem der vorherigen Ansprüche,
**dadurch gekennzeichnet, dass**
der Winkel, den mindestens 50 % der Fasern mit einer exakt in Querrichtung des Vlieses verlaufenden Achse einschließen, zwischen 5° und 45°, vorzugsweise zwischen 15° und 30° liegt.

6. Klebeband nach Anspruch 5,
**dadurch gekennzeichnet, dass**
der Anteil der Fasern, die einen Winkel zwischen 5° und 45°, vorzugsweise zwischen 15° und 30° mit einer exakt in Querrichtung des Vlieses verlaufenden Achse einschließen, über 80 %, bevorzugt über 90 %, besonders bevorzugt über 95 % liegt.

7. Klebeband nach zumindest einem der vorherigen Ansprüche,
**dadurch gekennzeichnet, dass**
das Flächengewicht des Vlies-Nähwirkträgers zwischen 30 g/m² und 180 g/m² liegt.

8. Klebeband nach zumindest einem der vorherigen Ansprüche,
**dadurch gekennzeichnet, dass**
die Fadenzahl der Übernähfaden unter dem Wert von 30 Fäden/25 mm Breite des Trägers liegt, vorzugsweise zwischen 10 bis 24 Fäden/25 mm Breite des Trägers, besonders bevorzugt bei 22 Fäden/25 mm Breite des Trägers.

9. Klebeband nach zumindest einem der vorherigen Ansprüche,
**dadurch gekennzeichnet, dass**
das Vliesmaterial durch Kalandern verdichtet ist.

10. Klebeband nach zumindest einem der vorherigen Ansprüche,
**dadurch gekennzeichnet, dass**
es sich bei der Kleberbeschichtung um eine Klebmasse auf Basis Naturkautschuk, Synthesekautschuk, Acrylat, vorzugsweise eine Acrylatschmelzhaftklebemasse, oder Silikon handelt.

11. Verwendung eines Klebebandes nach zumindest einem der vorherigen Ansprüche zum Ummanteln von langgestrecktem Gut, wobei das Klebeband in einer Schraubenlinie um das langgestreckte Gut geführt wird.

12. Verwendung eines Klebebandes nach zumindest einem der vorherigen Ansprüche zum Ummanteln von langgestrecktem Gut, wobei das langgestreckte Gut in axialer Richtung von dem Band umhüllt wird.

13. Vlies-Nähwirkträger, der aus einem vorverfestigten Vorvlies aus Stapelfasern hergestellt wird, wobei das Stapelfasergelege vor dem Vernähen durch eine Vernadelung vorverfestigt wird, wobei die Vernadelungsdichte durch die Vernadelung 1 Nadel/cm² Stapelfasergelege bis 50 Nadeln/cm² Stapelfasergelege beträgt, wobei in das vorverfestigte Vorvlies die parallel zueinander laufenden Fäden eingenäht werden, so dass der fertige Vlies-Nähwirkträger entsteht, wobei die Höchstzugkraft des vorverfestigten, aber noch nicht übernähten Vorvlieses kleiner als 2 N/cm, vorzugsweise kleiner 1 N/cm, besonders vorzugsweise kleiner 0,5 N/cm ist.

## Claims

1. Adhesive tape consisting of a carrier and of an adhesive layer applied to at least one side of the carrier, wherein the carrier is a thread-stitched web nonwoven carrier produced from a preconsolidated base web of staple fibres, wherein the preconsolidating of the staple fibre web before stitching is effected via needling, wherein the needling density due to said needling is in the range from 1 needle/cm² of staple fibre web to 50 needles/cm² of staple fibre web, wherein the mutually parallel threads are stitched into the base web to form the final thread-stitched web nonwoven carrier, wherein the ultimate tensile strength of the preconsolidated but not as yet overstitched base web is less than 2 N/cm, preferably below 1 N/cm and more preferably below 0.5 N/cm.

2. Adhesive tape according to Claim 1,
**characterized in that**
the web consists of polyester, polypropylene, polyethylene or polyamide fibres.

3. Adhesive tape according to Claim 1 or 2,
**characterized in that**
the stitching threads consist of polyester, polypropylene, polyethylene or polyamide.

4. Adhesive tape according to one or more of Claims 1 to 3,
**characterized in that**
the stitching threads form a parallel arrangement in the machine direction.

5. Adhesive tape according to one or more of the preceding claims,
**characterized in that**
the angle made by at least 50% of the fibres relative to an axis extending exactly in the transverse direction of the web is between 5° and 45° and preferably between 15° and 30°.

6. Adhesive tape according to Claim 5,
**characterized in that**
the proportion of fibres forming an angle between 5° and 45° and preferably between 15° and 30° relative to an axis extending exactly in the transverse direction of the web is above 80%, preferably above 90% and more preferably above 95%.

7. Adhesive tape according to one or more of the preceding claims,
**characterized in that**
the basis weight of the thread-stitched web nonwoven carrier is between 30 g/m² and 180 g/m².

8. Adhesive tape according to one or more of the preceding claims,
**characterized in that**
the number of overstitching threads is below 30 threads/25 mm width of carrier, preferably between 10 to 24 threads/25 mm width of carrier and more preferably equal to 22 threads/25 mm width of carrier.

9. Adhesive tape according to one or more of the preceding claims,
**characterized in that**
the web material is compacted by calendering.

10. Adhesive tape according to one or more of the preceding claims,
**characterized in that**
the coating of adhesive comprises an adhesive based on natural rubber, synthetic rubber, acrylate, preferably an acrylate pressure-sensitive hotmelt adhesive, or silicone.

11. Use of an adhesive tape according to one or more of the preceding claims for jacketing elongate material, wherein the adhesive tape is passed around the elongate material in a helical line.

12. Use of an adhesive tape according to one or more of the preceding claims for jacketing elongate material, wherein the elongate material is enveloped by the tape in an axial direction.

13. Thread-stitched web nonwoven carrier produced from a preconsolidated base web of staple fibres, wherein the preconsolidating of the staple fibre web before stitching is effected via needling, wherein the needling density due to said needling is in the range from 1 needle/cm² of staple fibre web to 50 needles/cm² of staple fibre web, wherein the mutually parallel threads are stitched into the preconsolidated base web to form the final thread-stitched web nonwoven carrier, wherein the ultimate tensile strength of the preconsolidated but not as yet overstitched base web is less than 2 N/cm, preferably below 1 N/cm and more preferably below 0.5 N/cm.

## Revendications

1. Bande adhésive, constituée par un support et une couche adhésive appliquée sur au moins un côté du support, le support étant un support non-tissé aiguilleté, qui est fabriqué à partir d'un non-tissé préliminaire pré-solidifié à base de fibres discontinues, la nappe de fibres discontinues étant pré-solidifiée avant la couture par un aiguilletage,
la densité d'aiguilletage par l'aiguilletage étant de 1 aiguille/cm² de nappe de fibres discontinues à 50 aiguilles/cm² de nappe de fibres discontinues,
les fils parallèles les uns aux autres dans le non-tissé préliminaire étant cousus, de manière à former le support non-tissé aiguilleté fini,
la force de traction maximale du non-tissé préliminaire pré-solidifié, mais pas encore surpiqué étant inférieure à 2 N/cm, de préférence inférieure à 1 N/cm, de manière particulièrement préférée inférieure à 0,5 N/cm.

2. Bande adhésive selon la revendication 1, **caractérisée en ce que** le non-tissé est constitué de fibres de polyester, polypropylène, polyéthylène ou polyamide.

3. Bande adhésive selon la revendication 1 ou 2, **caractérisée en ce que** les fils à coudre sont constitués de polyester, polypropylène, polyéthylène ou polyamide.

4. Bande adhésive selon au moins l'une quelconque des revendications 1 à 3, **caractérisée en ce que** les fils à coudre sont parallèles les uns aux autres dans le sens machine.

5. Bande adhésive selon au moins l'une quelconque des revendications précédentes, **caractérisée en ce que** l'angle formé par au moins 50 % des fibres avec un axe exactement perpendiculaire au non-tissé est compris entre 5° et 45°, de préférence entre 15° et 30°.

6. Bande adhésive selon la revendication 5, **caractérisée en ce que** la proportion de fibres qui forment un angle compris entre 5° et 45°, de préférence entre 15° et 30°, avec un axe exactement perpendiculaire au non-tissé est supérieure à 80 %, de préférence supérieure à 90 %, de manière particulièrement préférée supérieure à 95 %.

7. Bande adhésive selon au moins l'une quelconque des revendications précédentes, **caractérisée en ce que** le poids superficiel du support non-tissé aiguilleté est compris entre 30 g/m² et 180 g/m².

8. Bande adhésive selon au moins l'une quelconque des revendications précédentes, **caractérisée en ce que** le nombre de fils de surpiqûre est inférieur à la valeur de 30 fils/25 mm de largeur du support, de préférence compris entre 10 et 24 fils/25 mm de largeur du support, de manière particulièrement préférée de 22 fils/25 mm de largeur du support.

9. Bande adhésive selon au moins l'une quelconque des revendications précédentes, **caractérisée en ce que** le matériau non-tissé est comprimé par calandrage.

10. Bande adhésive selon au moins l'une quelconque des revendications précédentes, **caractérisée en ce que** le revêtement adhésif est une masse adhésive à base de caoutchouc naturel, de caoutchouc synthétique, d'acrylate, de préférence une masse adhésive de contact thermofusible à base d'acrylate, ou une silicone.

11. Utilisation d'une bande adhésive selon au moins l'une quelconque des revendications précédentes pour l'enrobage d'un article allongé, la bande adhésive étant acheminée en hélice autour de l'article allongé.

12. Utilisation d'une bande adhésive selon au moins l'une quelconque des revendications précédentes pour l'enrobage d'un article allongé, l'article allongé étant enrobé par la bande dans la direction axiale.

13. Support non-tissé aiguilleté, qui est fabriqué à partir d'un non-tissé préliminaire pré-solidifié à base de fibres discontinues, la nappe de fibres discontinues étant pré-solidifiée avant la couture par un aiguilletage, la densité d'aiguilletage par l'aiguilletage étant de 1 aiguille/cm² de nappe de fibres discontinues à 50 aiguilles/cm² de nappe de fibres discontinues, les fils parallèles les uns aux autres dans le non-tissé préliminaire étant cousus, de manière à former le support non-tissé aiguilleté fini, la force de traction maximale du non-tissé préliminaire pré-solidifié, mais pas encore surpiqué étant inférieure à 2 N/cm, de préférence inférieure à 1 N/cm, de manière particulièrement préférée inférieure à 0,5 N/cm.
